# EUROPEAN PATENT APPLICATION

(11) **EP 3 376 423 A1**
(43) Date of publication of application: **19.09.2018**
(21) Application number: 17305269.7
(22) Date of filing: 14.03.2017
(51) Int. Cl.: G06F 21/56

(54) **SELF-ADAPTIVE COUNTERMEASURES**

(71) Applicant: GEMALTO SA, 92190 Meudon (FR)
(72) Inventor: PAHAUT, Olivier, 13881 Gemenos Cedex (FR); SINTZOFF, André, 13881 Gemenos Cedex (FR)
(74) Representative: Thomas, Christine Marie Catherine

(57) **Abstract**

The present invention relates to a method to protect the execution of a code (CC), said code (CC) being executed on board a device (D), said device (D) having at least one attack detector (AD), said method comprising the following steps:
- while the device (D) executes (S0) the code (CC) on field, detecting an attack by the attack detectors (AD),
- when an attack is detected, determine (S1) an execution context (EC),
- store (S2) the determined execution context (EC),
- while the device (D) executes again the code (CC) on field, tracking (S3) the code execution (S0) in regard with the stored execution context (EC),
- when a stored execution context (EC) is detected in the current execution (S0), introducing one or several countermeasures (S4) in the current execution.

## Description

### FIELD OF THE INVENTION

The present invention relates to a method to protect the execution of a code, said code being executed on board a device, said device having at least one attack detector. More particularly, the invention concerns the protection against fault attacks, differential fault attacks (DFA), combined attacks.

The invention also pertains to a device implementing said method.

### BACKGROUND OF THE INVENTION

The protection of sensitive code is an ever evolving field due to the development of ever more sophisticated attacks. To make this field evolving, evaluation laboratories perform penetration tests. To protect against fault attacks, countermeasures are thus added in platforms.

Some of these countermeasures could have a significant performance impact. For example stack integrity, executed instruction integrity protections affect performance. However some sensitive code requires such countermeasures to be permanently activated. This results in low performance execution of the code.

Also protections are sometimes dedicated to a specific attack path. If a new attack path is discovered, the existing protections could be not effective. In some cases, an existing attack path is not covered by existing protections. Further alternative and advantageous solutions would, accordingly, be desirable in the art.

### SUMMARY OF THE INVENTION

The present invention aims at protecting code against attacks without lowering the execution performance.

The present invention is defined, in its broadest sense, as a method to protect the execution of a code, said code being executed on board a device, said device having at least one attack detector, said method comprising the following steps:
- while the device executes the code on field, detecting an attack by the attack detector,
- when an attack is detected, determine an execution context,
- store the determined execution context,
- while the device executes again the code on field, tracking the code execution in regard with the stored execution context,
- when a stored execution context is detected in the current execution, introducing a countermeasure in the current execution.

The attack detectors can be:
- Environmental hardware sensors,
- Logical hardware sensors,
- Software sensors.

The invention offers the possibility to activate dynamically hardware/software countermeasures only during the execution of the process time location threatened by attacks. Thus, at the start of the device life only essential hardware and software countermeasures are enabled, but all environmental hardware sensors are enabled comprising glitch sensors, light sensors, frequency sensors... Fault detection is therefore active by the software or by the chip. When a fault is detected, the execution context is stored.

For native code, determining the execution context is typically to store addresses of caller functions and current program counter.

For Java code, determining the execution context is typically to store addresses of caller methods and current Java Program Counter.

At next execution, additional countermeasures are activated when matching any stored execution context and can be deactivated later once no more in attacked code. Countermeasures are thus activated on the field only when needed. It is here noted that the terms "on the field" means any use of the device. It could thus also mean a use in a laboratory environment. Also it is possible to adapt countermeasures to the kind of detected attack. Therefore, the method according to the present invention allows reducing the risks of success of malicious attacks.

According to a particular implementation, the execution context consists in a process time. Such a process time is a time range related to a specific event.

According to another implementation, the execution context consists in a process location. Such a process location is an instruction address range.

Countermeasures can be software ones, typically chosen among software random delay, software redundancy, trap, consistency check, software data integrity check, software code integrity check.

They can also be hardware ones, typically chosen among clock random jitter, clock cycle stealer, CPU pipeline random flush, uniform branch, hardware data integrity check, hardware code integrity check.

The present invention also relates to a device having a code on board to be executed and at least one attack detector, said device comprising an execution monitoring module to determine an execution context when an attack is detected by the attack detector while the device executes the code on field, a memory to store the thus determined execution context, said execution monitoring module being further adapted to track the execution of the code in regard with the stored execution context while the device executes again the code on field, and, when a stored execution context is detected in the current execution, to introduce a countermeasure in the current execution.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a device implementing the invention;
- Figure 2A and 2B show flowcharts of two parts of a method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

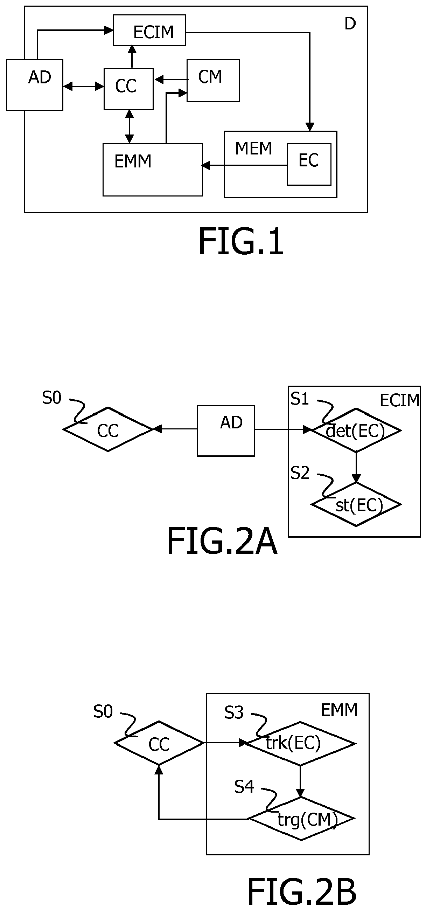

Figure 1 schematically shows a device D of the invention. This device D has a computer code CC on board to be executed. It also comprises at least one attack detector AD.

The device D of the invention further comprises an execution context identification module ECIM. This execution context identification module ECIM is identifying for example a set of specific instructions addresses associated with a microprocessor, a microcontroller or a virtual machine. The set of instructions addresses making the microprocessor to determine an execution context EC when an attack is detected by the attack detector AD while the device D executes the code CC on field. The device D further comprises a memory MEM to store the thus determined execution context (EC). The device D further comprises an execution monitoring module EMM. The execution monitoring module EMM is adapted to track the code CC execution path in regard with the stored execution context EC while the device D executes again the code CC on field, and, when a stored execution context (EC) is detected in the current execution, to introduce a countermeasure (CM) in the current execution.

In some implementation, countermeasures are hardware ones. Clock random jitter or clock cycle stealer can thus be implemented. Also CPU random flush consisting in randomly flushing instruction pipeline can be implemented. Uniform branches, which are conditional branch instructions requiring the same numbers of cycles whatever the branch taken.

Other implementation can have software countermeasures like software random delay and software redundancy, meaning that a software test is performed twice, trap, meaning a reference value is checked in memory, stack integrity check, meaning the values stored on the stack are checked in term of integrity.

Other implementation can mix hardware and software countermeasures.

The activation of the different countermeasures can be done gradually depending on the detected attacks or their frequency.

Figure 2A schematically shows a first part of the method of the invention. This part occurs during the on board execution S0 of the computer code CC to be protected and as stored in the device D. The invention is triggered by an attack detected by the attack detector AD during the execution of the code CC. In a step S1, as soon as an attack is detected by the attack detector AD, an execution context EC is determined and, in a step S2, the determined execution context EC is stored.

After this first part of the method of the invention, the device D comprises a computer code CC which is protected according to the invention.

Figure 2B schematically shows a second part of the method of the invention. This part also occurs during a next on board execution S0 of the computer code CC to be protected and as stored in the device D. The two parts are indeed implemented in parallel. For example new attacks can also be detected during such an execution and new execution context be stored in order to trigger protection according to the invention at next execution.

Thus, when the code CC is again executed in a step S0, the code CC execution is tracked in regard with the stored execution context in a step S3 and when a stored execution context EC is detected in the current execution, introducing in a step S4 one or several countermeasures CM in the current execution S0.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to protect the execution of a code (CC), said code (CC) being executed on board a device (D), said device (D) having at least one attack detector (AD), said method comprising the following steps:
- while the device (D) executes (S0) the code (CC) on field, detecting an attack by the attack detectors (AD),
- when an attack is detected, determine (S1) an execution context (EC),
- store (S2) the determined execution context (EC),
- while the device (D) executes again the code (CC) on field, tracking (S3) the code execution (S0) in regard with the stored execution context (EC),
- when a stored execution context (EC) is detected in the current execution (S0), introducing one or several countermeasures (S4) in the current execution.

2. Method according to claim 1, wherein, the code (CC) being native code, the execution context (EC) is addresses of caller functions and current program counter.

3. Method according to claim 1, wherein, the code (CC) running in a virtual machine, the execution context (EC) is addresses of caller functions or methods, and current program counter.

4. Method according to claim 1, wherein, the code (CC) being Java code, the execution context (EC) is addresses of caller methods and current Java Program Counter.

5. Method according to claim 1, wherein the activation of the different countermeasures are done gradually depending on the detected attacks and/or their frequency.

6. Method according to claim 1, wherein, the code (CC) being native code, the execution context (EC) is a sequence of instructions.

7. Method according to claim 1, wherein, the code (CC) running in a virtual machine, the execution context (EC) is a sequence of byte codes.

8. Method according to claim 1, wherein, the code (CC) being Java code, the execution context (EC) is a sequence of byte codes.

9. Method according to claim 1, wherein the execution context (EC) consists in a process time.

10. Method according to claim 1, wherein the execution context (EC) consists in a process location.

11. Method according to claim1, wherein said countermeasure (CM) is a software one.

12. Method according to claim 11, wherein said software countermeasure is chosen among software random delay, software redundancy, trap, consistency check, software data integrity check, software code integrity check.

13. Method according to claim 1, wherein said countermeasure (CM) is a hardware one.

14. Method according to claim 13, wherein said hardware countermeasure is chosen among clock random jitter, clock cycle stealer, CPU pipeline random flush, uniform branch, hardware data integrity check, hardware code integrity check.

15. Device (D) having a code (CC) on board to be executed and at least one attack detector (AD), said device (D) comprising an execution context identification module (ECIM) to determine an execution context (EC) when an attack is detected by the attack detection sensor (ADS) while the device (D) executes the code (CC) on field, a memory (MEM) to store the thus determined execution context (EC), said device further comprising an execution monitoring module (EMM) adapted to track the execution of the code (CC) in regard with the stored execution context (EC) while the device (D) executes again the code (CC) on field, and, when a stored execution context (EC) is detected in the current execution, to introduce a countermeasure (CM) in the current execution.
